(19) Europäisches Patentamt / European Patent Office / Office européen des brevets

(11) **EP 2 573 356 B1**

(12) **EUROPEAN PATENT SPECIFICATION**

(45) Date of publication and mention
of the grant of the patent:
**30.05.2018 Bulletin 2018/22**

(21) Application number: **12186102.5**

(22) Date of filing: **26.09.2012**

(51) Int Cl.:
*F02B 37/013* (2006.01)     *F02B 37/16* (2006.01)
*F02B 37/18* (2006.01)     *F02B 37/24* (2006.01)
*F02B 39/04* (2006.01)     *F02B 39/10* (2006.01)
*F02B 39/12* (2006.01)     *F02B 37/00* (2006.01)
*F02D 41/00* (2006.01)     *F02D 35/02* (2006.01)

(54) **Supercharging system and method for operation**

Turboaufladungssystem und Betriebsverfahren dafür

Système de suralimentation et procédé de fonctionnement

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.09.2011 US 201161538999 P**

(43) Date of publication of application:
**27.03.2013 Bulletin 2013/13**

(73) Proprietor: **Kasi Technologies AB
777 30 Smedjebacken (SE)**

(72) Inventors:
• **Löfgren, Isak**
**SE-429 42 SÄRÖ (SE)**
• **Sällström, Göran**
**SE-374 94 TRENSUM (SE)**
• **Rydqvist, Jan E.**
**SE-429 30 KULLAVIK (SE)**
• **Backlund, Ove**
**SE-426 79 VÄSTRA FRÖLUNDA (SE)**
• **Sandberg, Lars**
**SE-413 19 GÖTEBORG (SE)**

(74) Representative: **Awapatent AB
P.O. Box 11394
404 28 Göteborg (SE)**

(56) References cited:
**EP-A2- 1 905 988      WO-A2-2009/014488
US-A1- 2007 062 191      US-A1- 2008 312 803**

## Description

Field of the Invention

The present invention relates to a supercharging system for an internal combustion engine, a hybrid system, and a method for operating a supercharging system.

Background Art

In the field of automotive industry, much resources are and have been allocated towards developing systems for improving the efficiency of motive, or propulsion, systems by e.g. reducing the overall fuel consumption of internal combustion engines and propulsion systems comprising internal combustion engines.

WO 2009/014488 A2 discloses a supercharging system for an internal combustion engine, incorporating in combination a power transmission, a, a compressor, a turbine, an electric motor and a planetary gear connecting the electric motor and the compressor.

Reduced fuel consumption has e.g. been achieved by providing supercharging systems, wherein a compressor is used for forced induction of an internal combustion engine. In more detail, intake manifold pressure is increased in order to decrease internal pumping and throttling losses which, in turn, allows for decreased fuel consumption. Such a system further enables downsizing of a vehicle engine without substantially interfering with the vehicle, and vehicle engine performance requirements.

In an internal combustion engine of piston type, gas exchange takes place via the normal flow of homogeneous mixture of pure air mixed with fuel and outflow of the burnt mixture / exhaust through the intake and exhaust valves. After combustion and the working cycle's expansion in the cylinder the gas evacuates from the cylinder through the open exhaust valves.

In the case when an internal combustion engine is equipped with turbocharger the turbine size, the turbine housing swallowing capacity and the turbine operating point affects the possible outflow. A restrictive state renders a higher pressure in the exhaust manifold than the less restrictive for example.

The exhaust gas pressure in the manifold in turn affects the volume and mass of burnt gases remaining in the cylinder when the exhaust valves are closed. The exhaust gases are very hot and remain in the cylinder when the intake process starts with the opening of the intake valve.

Typically the term residual gases are used to describe the proportion of burned hot exhaust gases remaining in the combustion chamber after the completion of a full working cycle. A different share of remaining residual gases takes different volume and directly affects the amount of new fresh and cold homogeneous air/fuel mixture that can be sucked into the engine during the intake part of the cycle. A high proportion of residual gases will lower the fill factor of intake air/fuel mixture and gives a lower performance in proportion.

The strongest effect of the remaining residual gases is that it directly determines the mean temperature of the total gas volume (mixture consisting of cold air/fuel mixture and burned hot residual exhaust gases) contained in the cylinder when the intake valve is closed. The gas temperature is then further increased during the compression process to the point where ignition occurs. A high proportion of residual gases then provide a high starting temperature before compression and additional higher gas temperature when the combustion process starts. High temperature at the start of combustion gives an additional higher temperature over the following combustion process.

Fuels for engines have a defined resistance to uncontrolled knocking i.e. a resistance to go into unwanted combustion, as measured in a testing process that determines the octane rating. The propensity for a given engine to get into this unwanted combustion is controlled by several factors, one of which is the temperature, primarily in the not yet burnt gas mixture. The amount of residual gases directly affects the temperature and therefore the relationship in which gas exchange occurs, it is directly affecting the engine's tendency to go into the unwanted combustion, so-called knock. This may to some extent be managed by delayed ignition. However, delayed ignition may on the other hand give later and slower combustion, lower performance and lower efficiency of the engine.

There is hence a need to provide a supercharging system that reduces the tendency for uncontrolled knocking in the internal combustion engine.

Summary of the Invention

In view of the above-mentioned and other drawbacks of the prior art, a general object of the present invention is to provide a more efficient supercharging system.

According to a first aspect of the present invention there is provided a supercharging system for an internal combustion engine, comprising: a charging device with a turbine and a compressor, the compressor having a high speed shaft; a planetary gear coupled to the high speed shaft and an electric motor, or generator, via a low speed drive shaft; a clutch unit; and a power transmission for connecting a crank shaft of the combustion engine to the drive shaft via the clutch unit, wherein a system control unit is configured to control an in-cylinder mean temperature of said internal combustion engine by controlling the electric motor, or generator, speed.

The present invention is based on the insight that by controlling the mean temperature in the cylinders of the internal combustion engine of the supercharging system by means of the electric motor, or generator, speed, it is possible to control the engine in a sufficient manner to reduce the risk of e.g. having uncontrolled engine knocking. Controlling the electric motor, or generator, speed will enable control of the compressor speed and hence also the turbine speed. Hereby, the exhaust back pressure will be controlled which in turn will affect the in-cylinder mean temperature of the cylinders in the internal combustion engine. According to the present invention, by controlling the electric motor, or generator, to slow down in speed, the rotational speed of the compressor and the turbine will consequently be reduced. Reducing the turbine speed will reduce the exhaust back pressure from the internal combustion engine which in turn will reduce the mean temperature of the cylinders. This will reduce the risk of having uncontrolled knocking in the engine, since the in-cylinder mean temperature is directly linked to engine knocking. Hereby, the system increases the possible power output at a specific ignition angle and given fuel octane. Moreover, reducing exhaust back pressure may simultaneously reduce the proportion of residual gases in the combustion chamber and its influence on the homogeneous gas mixture temperature before compression. Hereby, substantially improved combustion efficiency is provided.

On the other hand, if it is desired to increase the in-cylinder mean temperature, the supercharging system is configured to control the electric motor, or generator, to increase its speed. Accordingly, by controlling the electric motor, or generator, it is possible to either add electrical power, or to reduce electrical power, to the supercharging system.

The in-cylinder mean temperature should in the following and throughout the entire description be interpreted as the mean temperature within the combustion chambers of the cylinders during a full working cycle. One of the cylinders' in-cylinder mean temperatures can be measured, or two or more of the cylinders' in-cylinder mean temperature can be measured.

According to an example embodiment, the turbine may be a variable nozzle turbine (VNT) comprising at least one variable nozzle turbine vane, wherein the in-cylinder mean temperature is controlled by means of controlling the electric motor, or generator, in conjunction with the variable nozzle turbine vane.

According to an example embodiment, the supercharging system may further comprise an air by-pass valve, wherein the in-cylinder mean temperature is controlled by means of controlling the electric motor, or generator, in conjunction with an openness ratio of the air by-pass valve.

According to an example embodiment, the supercharging system may further comprise an operable waste gate, wherein the in-cylinder mean temperature is controlled by means of controlling the electric motor, or generator, in conjunction with the operable waste gate.

By controlling the in-cylinder mean temperature by controlling the electric motor, or generator, in conjunction with the variable nozzle turbine vane and/or the air by-pass valve and/or the waste gate, the system may more efficiently control the in-cylinder mean temperature.

Furthermore, by controlling the compressor by-pass valve openness ratio relative to the electric motor speed ratio, it is possible to control the compressor operating point independently of engine operating point. Further, control of the operating point to avoid so called surge may also be achieved. According to an example embodiment, the system control unit may be further arranged to control the rotational speed of the charging device according to a reference speed value based on at least one parameter representative of an operational property of the supercharging system provided to the system control unit.

According to an example embodiment, the electric motor, or generator, may comprise a sensor arranged to generate a motor speed parameter value representative of the rotational speed of the electric motor, or generator; wherein the system control unit is arranged to control the rotational speed of the charging device based on the motor speed parameter according to a control algorithm.

For example, the sensor may be arranged as a separate unit and/or be at least partly formed by the electric machine itself.

Moreover, the electric motor, or generator, sensor can be used to monitor actual (real-time) turbo speed without having a turbo speed sensor. This may for example be achieved by calculations of electric machine/generator sensor parameter values compensated, or multiplied, with the planetary gear/traction device ratio. Furthermore, for gears/transmissions, such as traction drives or variable transmission gear sets, a slip coefficient may be added to the calculations in order to provide a more correct turbo speed measurement.

A variable nozzle turbine, and/or a turbine with a variable nozzle vane(s), allow for the possibility of controlling the turbine while maintaining high operational efficiency. For example, the turbine vanes may be rotated such that that the effective area of the vanes and, thus, the effective mass flow of, or through, the turbine for a given pressure ratio may be improved. For example, the turbine operation may be improved by adjusting the variable nozzle in relation to a blade speed ratio (BSR) parameter value, which is used to describe the efficiency of a turbine. A BSR value may e.g. be defined as

$$ BSR = \frac{w_t r_t}{\sqrt{2 c_p \, T_{03} \left( 1 - \Pi_t^{\gamma e - 1 / \gamma e} \right)}} $$

as, e.g. defined in Watson and Janota, 1982, p.152, wherein $w_t$ is turbine speed, $r_t$ is turbine radius, $c_p$ is turbine specific heat transfer constant, $T_{03}$ is turbine inlet temperature, $\Pi_t$ is the turbine pressure ratio, which may be defined as the pressure after divided by the pressure before the turbine, and $\gamma$ is ratio of specific heats. The definition of the BSR parameter, however, is not limited to the above exemplifying example. Other definition of the BSR parameter may be obtained through use of ideal gas law and other developed laws (equations) of thermodynamics.

According to an exemplifying embodiment, during operation, the VNT is controlled by determining an error value BSR(error) which may be defined as the difference between a measured real value BSR(real), determined by measurement of, among other, turbo speed in the manner described above with the use of electric machine/generator and calculation based on design parameters within the included planetary gear set, and a desired value BSR(desired), according to the following:

$$\mathrm{BSR(error)} = \mathrm{BSR(desired)} - \mathrm{BSR(real)}$$

wherein the error value is used for adjusting the variable nozzle(s) to improve or obtain optimum turbine efficiency at a specific turbine operating condition. For example, the error value is inputted into a VNT-regulator, such as a PID-regulator, and/or a closed loop regulator system, which may be integrated into a control system unit. Suitable parameter values which are desired under differing operational conditions and operational modes may e.g. be stored locally or remotely on a memory device accessible by the system control unit. Desired parameter values may also be determined using algorithm configured to output suitable parameter values based on operational parameters values associated with the supercharging system, the internal combustion engine, and/or the vehicle.

For example, according to an exemplifying embodiment, the variable nozzle turbine vane is arranged to adjust turbine efficiency of the first charging device based on sensor signal from the electric motor and/or an engine control unit.

According to an example embodiment, the variable nozzle turbine vane may be arranged to adjust turbine efficiency of the charging device based on sensor signal from the electric motor and/or an engine control unit.

According to an example embodiment, the system control unit may include a control algorithm to control at least one actuator of the variable nozzle turbine vane, or vanes.

According to an example embodiment, the charging device is a first charging device with a first turbine and a first compressor, wherein the supercharging system may further comprise a second charging device with a second turbine connected to a second compressor via a second compressor shaft, wherein the system control unit is arranged to control a parameter representative of pressure and/or mass flow of the first charging device in relation to the second charging device during matching between the first and to the second charging device.

It should be noted that the above described system control unit may control any of the described devices, either as a sole unit or by means of subunits connected to the system control unit.

According to an example embodiment, the supercharging system may further comprise an operable first waste gate coupled between an inlet side of the first turbine and an inlet side of the second turbine.

According to an example embodiment, the supercharging system may further comprise a second waste gate coupled between the inlet side of the second turbine and an outlet side.

According to an example embodiment, the air by-pass valve may be a first air by-pass valve, wherein the supercharging system may further comprise a second air by-pass valve.

According to an example embodiment, the first charging device may be a variable nozzle turbine, the system control unit may be operatively connected to the supercharging system to determine and control the state of the variable nozzle turbine, the first, second and third clutches, the electric motor, or generator, the first and second air by-pass valves, and the first and second first waste gates.

According to an example embodiment, the system control unit may be further configured to operate the supercharging system according to a control algorithm based on one, or a plurality of, input parameters representative of operational properties of the supercharging system.

According to an example embodiment, the above described input parameters may further comprise at least one of the following:

- a first pressure and/or mass flow parameter representative of air intake operational state (p1);
- a second pressure and/or mass flow parameter representative of second compressor operational state (p2);
- a third pressure and/or mass flow parameter representative of first compressor operational state (p3);
- a fourth pressure and/or mass flow parameter representative of exhaust gas operational state (p4);
- a fifth pressure and/or mass flow parameter representative of first turbine operational state (p5); and/or

a sixth pressure and/or mass flow parameter representative of second turbine operational state (p6).

According to an example embodiment, the supercharging system may further comprise an engine control unit and/or a vehicle control unit arranged to determine a first vehicle parameter representative of engine rpm, a second vehicle parameter representative of an engine throttle position and/or derivatives thereof, and a third vehicle parameter representative of a driver pedal position and/or derivatives thereof, wherein the system control unit is arranged to control the supercharging system based on the first, second and third vehicle parameters.

According to a second aspect of the present invention there is provided a method for operating a supercharging system for an internal combustion engine including an exhaust gas propelled turbo supercharging system, a mechanical supercharging system, and an electrical supercharging/regenerating system; wherein the exhaust gas propelled turbo supercharging system includes a first charging device; the first charging device comprising a first turbine and a first compressor, the first compressor being arranged on a first compressor shaft; the exhaust gas propelled turbo supercharging system coupling the first turbines to at least one exhaust outlet of the internal combustion engine, the electrical supercharging/regenerating system coupling an electric motor, or generator, to the first compressor shaft via a planet gear, and the mechanical supercharging system coupling a crank shaft of the engine to the electric motor via a first clutch, the method comprising: controlling an in-cylinder mean temperature of said internal combustion engine by controlling the electric motor, or generator, speed.

According to an example embodiment, the in-cylinder mean temperature of the internal combustion engine, at combustion, may be controlled by control of exhaust back pressure.

According to an example embodiment, the method may further comprise driving the first compressor of the first charging device with the electric motor until a reference pressure and/or mass flow is obtained.

Effects and features of this second aspect are largely analogous to those described above in relation to the first aspect of the present invention.

According to a third aspect of the present invention there is provided a method for operating a supercharging system for the internal combustion engine including an exhaust gas propelled turbo supercharging system, a mechanical supercharging system, and an electrical supercharging/regenerating system; wherein the exhaust gas propelled turbo supercharging system includes a first and second charging device; the first charging device comprising a first turbine and a first compressor, the first compressor being arranged on a first compressor shaft; the second charging device comprising a second turbine and a second compressor, the second compressor being arranged on a second compressor shaft the exhaust gas propelled turbo supercharging system coupling the first and second turbines to at least one exhaust outlet of the internal combustion engine, the electrical supercharging/regenerating system coupling an electric motor, or generator, to the first and/or second compressor shaft via a planet gear, and the mechanical supercharging system coupling a crank shaft of the engine to the electric motor via a first clutch, the method comprising: controlling the rotational speed of the first charging device for avoiding engine knock.

According to an embodiment, the method may further comprise sensing and/or controlling rotational speed of the first compressor of the first charging device with the electric motor during matching between the first and to the second charging devices.

Other effects and features of this third aspect of the present invention are largely analogous to those described above in relation to the other aspects of the present invention.

According to a fourth aspect of the present invention, there is provided a supercharging system for an internal combustion engine comprising a first charging device with a first turbine and a first compressor, the compressor having a first high speed shaft; a planetary gear coupled to the first high speed shaft and an electric motor, or generator, via a low speed drive shaft; a clutch unit; and a power transmission for connecting a crank shaft of the combustion engine to the drive shaft via the clutch unit, wherein the supercharging system further includes a first compressor bypass valve arranged to control flow of air bypassing the compressor, wherein a working point of the compressor is controlled by control of an opening ratio of the bypass valve.

According to an example embodiment, the opening ratio of the compressor valve may be proportional to the compressor ratio of a compressor map.

According to an example embodiment, the supercharging system may comprise any of the above described features in relation to the first aspect of the present invention.

Other effects and features of this fourth aspect of the present invention are largely analogous to those described above in relation to the other aspects of the present invention.

Generally, other objectives, features, and advantages of the present invention that will appear from the following detailed disclosure, from the attached dependent claims as well as from the drawings are equally possible within the scope of the invention.

Brief Description of Drawings

Embodiments of the invention will now be described, by way of example, with reference to the accompanying drawings, wherein:

Fig 1 a illustrates a schematic side view of an internal combustion engine equipped with a supercharging system according to an embodiment of the present invention;

Fig. 1b is a schematic view of a supercharging system and a hybrid drive system according to an embodiment of the present invention;

Figs. 2a - 2c illustrate example embodiments of a supercharging system according to the present invention;

Figs. 3a - 3c illustrate in detail example embodiments of various power distributions in a supercharging system;

Fig. 4 illustrate an example embodiment of the relationship between electric machine speed and the openness degree of the compressor bypass valve; and

Fig. 5 illustrates an example embodiment of the relation between compressor by pass openness degree and compressor mass flow for various valve diameters.

It should be understood that the drawings are only schematic and not true to scale and, as is readily appreciated by a person skilled in the art, dimensions other than those illustrated in the drawings are equally possible within the scope of the invention.

Detailed Description of Embodiments of the Invention

An embodiment of the invention will be described in more detail in the following with reference to the accompanying drawings.

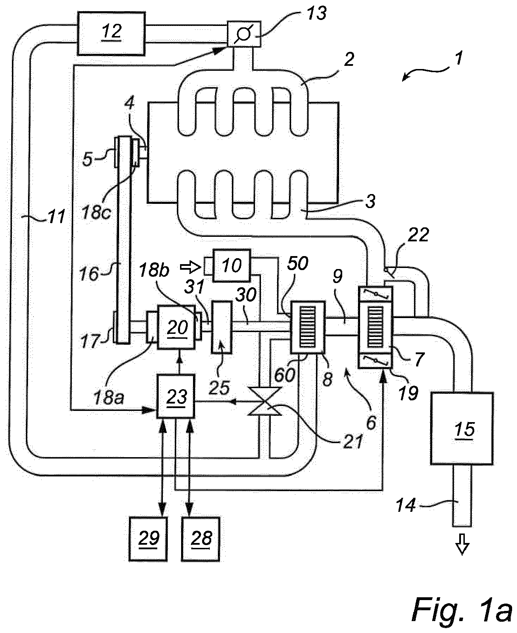

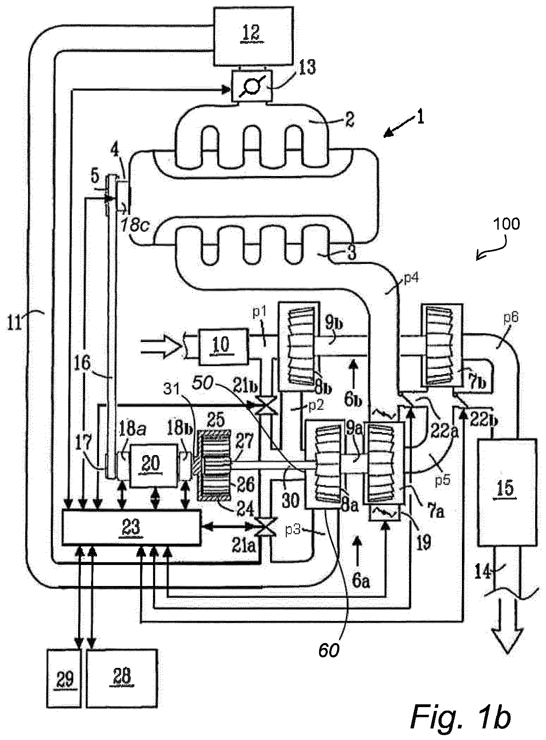

Fig. 1 a shows an internal combustion engine 1 having an air intake manifold 2 with four air intake pipes, intimating that the engine has four cylinders. However, the number of cylinders can be higher as well as lower. The internal combustion engine 1 further has an exhaust gas manifold 3, having four exhaust gas pipes for the four cylinders of the engine.

Attached to the engine block is a supercharging system 6 comprising a turbo charging device comprising a turbine 7 and a compressor 8 arranged on a common shaft 9 in such a way that when the turbine rotates the compressor rotates simultaneously. The compressor 8 is connected to a high-speed shaft 30 projecting in the opposite direction to the common turbine/compressor shaft 9. The turbine is driven by the exhaust gases from the exhaust gas manifold 3, and an impeller (not shown) of the co-rotating compressor 8 is compressing ambient air which is sucked in via an air filter 10. The compressed air is lead through a duct 11 via an intercooler 12 and a throttle 13 into the internal combustion engine 1 through the air intake manifold 2, whereas the exhaust gases after having passed the turbine are evacuated via an exhaust gas conduit 14 with a catalyzer 15. The throttle may for example be an electrically controlled throttle.

The engine 1 has a crankshaft 4 which protrudes outside the engine and is equipped with a pulley 5. The pulley 5 is rotating with the crankshaft 4 of the engine and transfers via a belt drive 16 rotation to a shaft 17, which via a one way clutch 18a is coupled to an electric machine 20, which in turn is coupled through a low-speed shaft 31 to a ring gear wheel (not shown) of a planetary gear 25 with planet gear wheels (not shown) and a sun gear wheel (not shown) connected to the high-speed shaft 30. In this manner the rotation of the crank shaft 4 can be transferred to the common shaft 9, which is the common shaft for the turbine 7 and the compressor 8, in situations where the turbine has not reached its working area. The belt drive described is not limited to be a belt drive, any type of appropriate transmission units can be used. The clutch unit mentioned can be mechanical one way clutches of any appropriate type, although electric clutches, viscous couplings and the like are also possible.

The engine also incorporates a compressor bypass valve 21 and a wastegate 22. The compressor bypass valve 21 is controlled by way of a control box 23, which based on different engine behaviour parameters, will operate for maintaining the rotational speed of the turbine so high as possible in order to avoid dangerous pressure increase at the exhaust side. The system control unit 23 is further operatively connected to an engine control unit 28, and a vehicle control unit 29.

Furthermore, the system 1 comprises power transmission 16, such as a belt drive, which operatively connects the common axis of the electric machine 20 and low speed shaft 31, via a first clutch 18a and third clutch 18c, to the crankshaft 4 of the engine 1, such that rotational power may be transferred between the crankshaft and the common axis of the electric machine 20, the low speed shaft 31, planetary gear/traction device 25, and the high speed shaft 30, depending on the configuration of the clutches 18a and 18b.

For example, the high-speed shaft 30 may be used for providing rotational power from the electric machine to the first charging device for enabling e.g. electrically powered charging of the internal combustion engine, referred to as e-boost, or for enabling mechanically powered turbo charging of the engine by using mechanical rotational power from the internal engine. The high speed shaft 30 may also be used for obtaining, or extracting, the rotational power generated in the charging device, typically in the turbine, and to convert this produced rotational power into electric energy be means of the electric motor which is configured to operate as a generator and which is connected to the drive shaft, or to convert the rotational power into mechanical power be means of the power transmission 16.

With the described supercharging system of Fig. 1a, the supercharging system is hence further configured to control an in-cylinder mean temperature of the cylinders in the internal combustion engine 1. This can be accomplished by controlling the electric motor, or generator, 20 speed. By controlling the speed of the electric motor, or generator, 20, the speed of the compressor 8 as well as the turbine 7 is controlled. Hereby, the exhaust back pressure will be controlled which in turn will affect the in-cylinder of mean temperature of the cylinders in the internal combustion engine 1. Hereby, if the speed of the electric motor, or generator, 20 is, for example, reduced, the in-cylinder mean temperature will in turn be reduced. The in-cylinder mean temperature is more or less directly linked to the probability of having engine knock. Accordingly, lowering the speed of the electric motor, or generator, 20 will reduce the tendency of having engine knock.

In Fig. 1b, a schematic view of a supercharging system 100 and/or hybrid drive system 100 according to an embodiment of the present invention, is illustrated.

The supercharging system 100 comprises an internal combustion engine 1, in the following also referred to as the engine 1, comprising an intake manifold 2 for allowing compressed air to enter into the engine 1. The engine 1 further comprises an exhaust manifold 3 for exhaust gases leaving the engine 1, which exhaust gases are used for driving turbines 7a and 7b of a first 6a and a second 6b charging device, respectively. The engine further comprises a crankshaft which is arranged to provide rotational power for propelling a vehicle, such as a car, truck, lift-truck, construction vehicle, buss, ship, boat, aircraft, or other vehicles or crafts, via a propulsion drive line. A crankshaft pulley 5 is connected to the crankshaft 4, which pulley 5 forms part of a belt drive power transmission between the crankshaft 4 and an electric machine 20. However, the power transmission between engine and electrical motor is not limited to a belt drive transmission.

As illustrated, the system 100 comprises a first charging device 6a comprising a first turbine 7a being arranged downstream of, in relation to the exhaust gas flow, and connected to the exhaust gas manifold 3, and a first compressor 8a for generating compressed air to the supplied to the engine 1. The first turbine 7a is connected via a first compressor shaft 9a to the first compressor 8a, such that rotational power provided by the exhaust gases from the engine to the first turbine 7a may be transferred to the first compressor 8a. The system 100 further comprises a second charging device 6b comprising a second turbine 7b being arranged downstream of, in relation to the exhaust gas flow, and connected to the outlet side of the first turbine 7a, and a second compressor 8b for generating compressed air to the supplied to the engine 1. The second turbine 7b is connected via a second compressor shaft 9b to the second compressor 8b, such that rotational power provided by the exhaust gases from the engine to the second turbine 7b may be transferred to the second compressor 8b. Hence, the second charging device 6b is arranged sequentially after the first charging device 6a, in relation to the exhaust gas flow. However, the invention is not limited to this configuration, and the second charging device 6b may be arranged before, or in a parallel configuration with, the first charging device 6a, in relation to the exhaust gas flow.

On an exhaust gas system side of the system 100, it further comprises a first 22a and second 22b waste gate which enables bypassing of the exhaust gases in relation to the first 7a and second 7b turbines, respectively, either independently or in combination. For example, if partially opened, the waste gates 22a, 22b enable bypassing of at least a portion of the exhaust gas directly to an exhaust system outlet 14, optionally via an exhaust gas catalyzer 15.

On a compressor system side of the system 100, air from an air inlet and air inlet filer 10 is compressed and provided to the engine e.g. via engine air inlet ducts 11, intercooler 12 and/or throttle 13. The air is at least partly compressed by the first 8a and second 8b compressors, independently or in combination, depending on the configuration of a first 21a and a second 21b air by-pass valves.

By adjusting the air by-pass vales 21a, 21b and the waste gates 22a, 22b, the relative operation of the first and second charging device 6a and 6b may be adjusted in relation to each other, such that only one is operational in a single stage operational mode, or both are operational in an combined operational mode wherein the operational ratio between the first and second charging devices may be suitably adjusted.

As further illustrated, the first charging device 6a is arranged along a common axis with, and operatively connected to, via a planetary gear/traction device 25, to the electric machine 20 comprising an electrical motor/generator such that the electrical machine 20 may, according to various embodiments, operate both an electric motor and/or as an electrical generator.

As schematically illustrated, the planetary gear/traction device 25 comprises e.g. a ring wheel 24, two or a plurality of planet wheels 26, and a sun wheel 27. In more detail, a high speed shaft 30 of the first charging device 6a, which high speed shaft 30 is connected to and extends from the first compressor shaft 9a, is connected to the sun wheel 27, on a high speed side of the planetary gear/traction device 25. On the other side of the planetary gear/traction device 25, on a low speed side, a low speed shaft 31 is connected to and provided between the ring wheel 24 and a second clutch 18b. The second clutch 18b connected the low speed shaft with the electrical machine 20, or, in more detail, a rotor member of the electric machine 20.

As illustrated, the low speed shaft 31 on the low speed side of the planetary gear/traction device 25 coincides with the axis of the electrical machine 20. Hence, the low speed shaft 31 is also coupled to the crankshaft 4 of the engine 1 via clutches 18a, 18b, and 18c.

However, the electrical machine 20 may be arranged separated from and connected to the low speed shaft 31 via a suitable transmission, such as a belt drive. Furthermore, the electrical machine 20 may be operatively connected to the common axis of the high speed shaft 30 and low speed shaft 31 on the high speed side of the planetary gear/traction device 25. For example, a high speed electrical machine may be used and operatively connected to the high speed shaft 30, optionally via a clutch.

As further illustrated, the first charging device includes a variable nozzle turbine (VNT) which comprises variable vanes 19 which may be adjusted by the control system unit 23 in order to adapt the turbine to current exhaust gas flow condition and the operational mode of the supercharging system. The control system unit 23 is further operatively connected to an engine control unit 28, and a vehicle control unit 29. The control system unit 23 is connected to and arranged to control the first 18a, second 18b and third 18c clutches, the first and second air by-pass vales 21a, 21b and the waste gates 22a, 22b, and the engine's throttle 13 according to the different operating modes of the supercharging system and hybrid drive system 100.

The control system unit 23 is further operatively connected to sensors arranged to output observation parameter values representative of air/exhaust gas pressure and/or mass flow at a plurality of observations point, or regions, such as the illustrated intake air point p1, second compressor point p2, first compressor point p3, exhaust gas point p4, first turbine point p5, and second turbine point p6.

The supercharging system described above and depicted in Fig. 1b can also, as described above in relation to the description of Fig. 1a, control an in-cylinder mean temperature of the cylinders in the internal combustion engine 1. This can be accomplished by controlling the electric motor, or generator, 20 speed. By controlling the speed of the electric motor, or generator, 20, the speed of the compressor 8 as well as the turbine 7 is controlled. Hereby, the exhaust back pressure will be controlled which in turn will affect the in-cylinder of mean temperature of the cylinders in the internal combustion engine 1. Hereby, if the speed of the electric motor, or generator, 20 is, for example, reduced, the in-cylinder mean temperature will in turn be reduced. The in-cylinder mean temperature is more or less directly linked to the probability of having engine knock. Accordingly, lowering the speed of the electric motor, or generator, 20 will reduce the tendency of having engine knock.

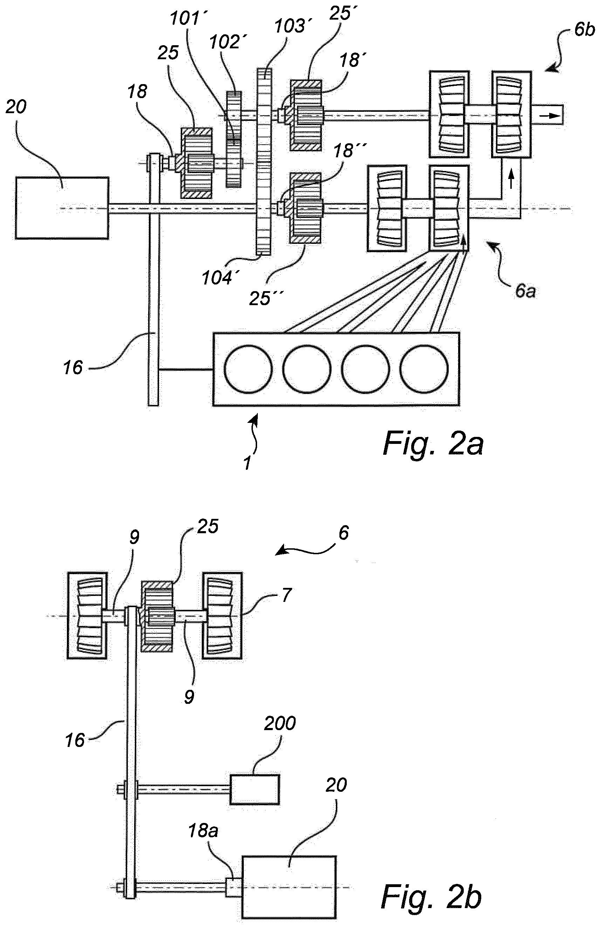

Attention is now drawn to Figs 2a - 2c, which illustrate further example embodiments of a supercharging system according to the present invention, according to which an electric motor, or generator, 20 is arranged to control rotational speed of a charging device for controlling the in-cylinder mean temperature and thereby avoiding engine knock.

Starting with Fig 2a, which illustrates an alternative embodiment of the supercharging system illustrated in Fig. 1b. The supercharging system depicted in Fig. 2a comprises three planetary gear sets 25, 25', 25", where the sun wheel of the first planetary gear set 25 is connected a first gear 101' which is in meshed connection with a second gear 102'. Moreover, a third gear 103' is arranged between the second gear 102' and the ring gear of the second planetary gear set 25', wherein the third gear 103' is in meshed connection with a fourth gear 104' being arranged between an electric motor, or generator, 20 and the ring gear of the third planetary gear set 25".

Furthermore, the supercharging system also comprises two charging devices 6a, 6b which each are coupled to the second 25' and third 25" planetary gear sets respectively.

By means of the supercharging system depicted in Fig. 2a, the charging devices 6a, 6b can run independently of each other or be configured to run at different rotational speed. Moreover, an internal combustion engine 1 is also provided to the supercharging system depicted in Fig. 2a. The internal combustion engine is connected to the first charging device 6a in a similar manner as described in relation to Fig. 1b. With the illustrated supercharging system of Fig. 2a, it is hence possible to run only the first charging device 6a while keeping the second charging device in e.g. idle position. The same is applicable the other way around, i.e. to run the second charging device 6b and keeping the first charging device 6a in e.g. idle position. Still further, the supercharging system depicted in Fig. 2a may also run the first 6a and the second 6b charging device simultaneously. Hereby, the power balance between the two charging devices, and hence the turbo shaft speed, will be controlled. Also, the crankshaft is coupled to the first planetary gear set 25 via a power transmission 16.

Accordingly, the mechanical power, in the form of rotational speed or torque, from the internal combustion engine 1 can be provided to the first planetary gear set 25, via the power transmission 16 and a clutch 18. By means of the first 101', second 102', third 103' and fourth 104' gear, the mechanical power can either be provided to the first charging device 6a via the third planetary gear set 25" and a clutch 18", or to the second charging device 6b, via the second planetary gear set 25' and a clutch 18', The mechanical energy can also be provided to both of the first 6a and the second 6b charging devices. To control the mechanical energy to be provided to either the first charging device 6a, the second charging device 6b or to both of the first 6a and the second charging devices 6a, 6b, clutches 18', 18" are used in the illustrates embodiment of Fig. 2a. However, such clutches and how they work is considered to be known by the skilled person and can therefore off course be provided in other configurations as the one illustrated in Fig. 2a. Also, instead of, or as a complement to the clutches, the various paths for transferring mechanical energy can be realized by e.g. controlling the first 102' and third 103' gears. For example, it may be possible to axially move the first gear 101' and the third gear 103', respectively, so they alter between a meshed connection and an unmeshed connection with their respective second 102' and fourth 104' gears.

Also, with the supercharging system depicted in Fig. 2a, it is possible to provide thermal energy from the internal combustion engine to the turbine of the first charging device 6a. The compressor shaft of the first turbine can then convert the thermal energy to mechanical energy and, via the fourth 104' and third 103' gear and the second planetary gear set 25" provide the energy to the second charging device 6b.

Turning to Fig. 2b, a planetary gear set 25 is positioned between the turbine and the compressor of the charging device 6. The sun wheel of the planetary gear set is coupled to the high-speed shaft 9 and also acts as bearing support for the high-speed shaft. The internal combustion engine is not included in the depicted embodiment of Fig. 2b, but it should be readily understood that such internal combustion engine of course is connectable to the illustrated embodiment of the supercharging system.

Moreover, the supercharging system illustrated in Fig. 2b is configured to distribute energy from the exhaust gases, either mechanically or electrically. The energy from the exhaust gases may, for example, be converted to mechanical energy by the high-speed shaft and via sun wheel and the ring wheel of the planetary gear set 25 be provided to the power transmission and further to the electric motor 20 which then act as a generator and hence convert the mechanical energy into electrical energy. The electrical energy can be stored in a battery of be used in the electrical vehicle system. The energy from the exhaust gases may be provided to auxiliary components 200 of the supercharging system or auxiliary components of the vehicle onto which the supercharging system is installed. Also, energy from the charging device may also be provided to the internal combustion engine.

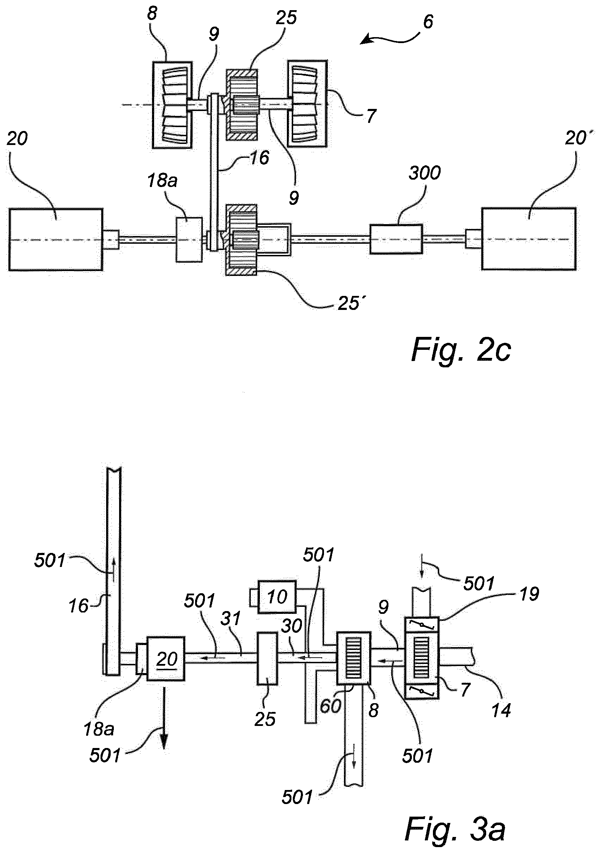

Fig. 2c illustrates a still further embodiment of the supercharging system 6 according to the present invention. A first 25 and a second 25' planetary gear set are coupled to each other by means of a gear transmission. The sun wheel of the first planetary gear set 25 is coupled to the turbo shaft and also acts as bearing support to the turbo shaft. The second planetary gear set 25' acts as a power split between an auxiliary output shaft, the first planetary gear with the turbo charger and a high speed electrical motor/generator. By controlling the output power and rotation directions of the two electrical motors/generators the speed and power output to the auxiliary can be controlled. The high speed shaft and sun wheel of the second planetary gear can also be locked in one or both rotation directions by a clutch.

Furthermore, the electric motors 20, 20' can be configured to run auxiliaries 300, especially if the internal combustion engine (not shown here) is shut off. Also, one of the electric motors are coupled to the planet carrier of the second planetary gear set 25' while the other electric motor is coupled to the sun wheel of the second planetary gear set 25' in the illustrated example embodiment depicted in Fig. 2c. Other configurations of coupling the electric motors 20, 20' to the second planetary gear set 25' are of course conceivable.

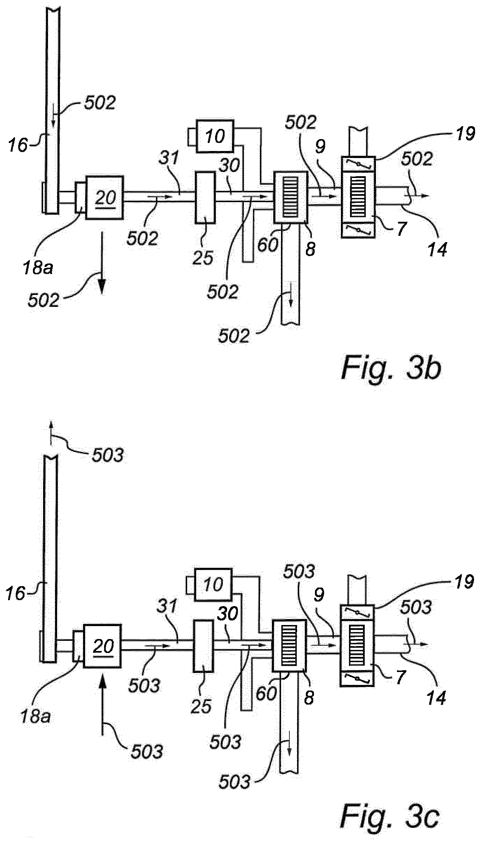

Turning now to Figs. 3a - 3c which illustrates example embodiments of various power distribution in an exemplary supercharging system in accordance with the present invention. The power distribution illustrated in Figs. 3a - 3c are depicted for the supercharging system illustrated in Fig. 1 a. It should, however, be readily understood that the below described power distribution is also applicable for other embodiments of the supercharging system according to the present invention.

Turning first to Fig. 3a, thermal energy is extracted from the internal combustion engine via the exhaust manifold. The thermal energy can be defined by e.g. mass flow, exhaust manifold pressure, exhaust manifold temperature and extracted turbine power. As indicated by 501, the thermal energy is provided into the turbine 7. By means of the compressor shaft 9 which is coupled to the turbine 7 and the compressor 8, the thermal energy can be converted into mechanical energy in the form of rotational speed and/or torque of the compressor shaft 9. The mechanical energy can be either outputted to the internal combustion engine 1 via the compressor 8 through the compressor outlet side 60 as thermal energy which was converted from mechanical energy by means of the compressor 8. This thermal energy can be defined as e.g. mass flow, compressor pressure, compressor temperature etc. However, instead of outputting the energy through the compressor outlet side 60, the mechanical energy which was converted from thermal energy by means of the compressor shaft 9 can be provided to the electric motor, or generator, 20 via the planetary gear set 25. The electric motor, or generator, 20 can then either convert the mechanical energy into electrical energy, or to further provide the mechanical energy to the internal combustion engine and/or auxiliaries via the clutch 18a and the power transmission 16 connecting the crank shaft of the internal combustion engine to the drive shaft 31. If mechanical energy is converted into electric energy by means of the electric motor, which than acts as a generator, the electrical energy can either be stored a battery and/or be used in e.g. the electrical vehicle power system.

Turning now to Fig. 3b, which illustrates how mechanical energy, indicated by arrow 502, which is received from the crank shaft of the internal combustion engine 1 can be provided through the system. As depicted in Fig. 3b, mechanical energy is provided from the internal combustion engine via the crank shaft and the power transmission 16. The mechanical energy can be provided to the electric motor, or generator, where it can be outputted as electrical power to e.g. a battery and/or to be used in the electrical vehicle power system. However, the mechanical energy from the crank shaft via the power transmission 16 can instead of, or as a complement to be converted into electrical energy, also be converted into thermal energy by means of the compressor 8 and outputted through the compressor outlet side 60 back to the internal combustion engine.

Finally, reference is made to Fig. 3b, which illustrates how electrical energy from e.g. a battery or the like can be provided to the system via the electric motor, or generator, 20. As indicated by the arrow 503, electrical energy is provided to the electric motor, or generator, 20 from e.g. a battery (not shown) of the vehicle. The electrical energy can be converted into mechanical energy and provided to the internal combustion engine via the power transmission 16. Hereby, the electric motor, or generator, 20 can, for example, start up the internal combustion engine, or drive the crank shaft of the internal combustion engine. The mechanical energy converted by the electric motor, or generator, 20 and provided to the power transmission may also be used to drive auxiliaries of the vehicle. However, the electrical energy can, instead of or as a complement, be converted into mechanical energy by the electric motor, or generator, 20 and provided to the compressor 8. In the compressor 8 the mechanical energy is converted into thermal energy, as described above, which can be outputted to the internal combustion engine through the compressor outlet side 60.

The described flow of energy depicted in Figs. 3a - 3b are described to occur individually and without connection to each other. It should, however, be readily understood that the energy transfer depicted and described in relation to Fig. 3a may occur simultaneously, or in combination, with the energy transfer depicted and described in e.g. Fig. 3b. Accordingly, combinations of energy transfer for the three different examples are possible. Furthermore, the electric motor, generator, 20 should also be interpreted as an electric motor when emitting electrical power through the described supercharging system, and as a generator when extracting electrical power from the same supercharging system.

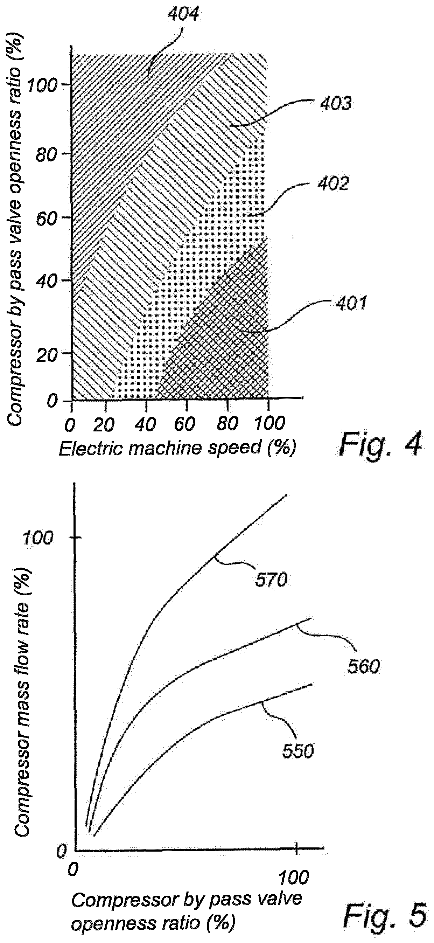

Attention is now drawn to Fig. 4, which illustrates compressor power consumption dependent on various parameters of the supercharging system. As is depicted in Fig. 4, where the y-axis represents the compressor by-pass valve openness ratio and the x-axis represents the electric machine speed, an increased electric machine speed in combination with a low openness ratio of the compressor will result in high compressor power consumption 401 of the supercharging system. In contrast, a low electric machine speed in combination with a high openness ratio of the compressor by-pass valve will result in low compressor power consumption 404 of the supercharging system. Combinations of various electric machine speeds and openness ratio on the compressor by-pass valve will result in various different degrees of compressor power consumptions 401, 402, 403, 404, as is clearly illustrated in Fig. 4.

Turning to Fig. 5, compressor surge line is illustrated as a function of compressor bypass valve openness ratio (x-axis) and compressor mass flow rate (y-axis) for three different valve diameters 550, 560, 570. The compressor bypass valve is arranged to control flow of air bypassing the compressor, wherein a working point of the compressor is controlled by control of the openness ratio of the bypass line. As can be seen, the compressor surge line is more affected by compressor by-pass valve openness ratio for large valve diameter 570 than for a small valve diameter 550. An intermediate valve diameter 560 affects the surge line more than a small diameter 550 but less affected in comparison to a large diameter 570. The relationship between the three different valve diameters should be interpreted as an illustrative example. The internal relationship between the three diameters serves only as an illustrative example and can of course vary depending on specific valve diameters used.

With the above described supercharging systems, a plurality of advantages is provided in relation to prior art, for example:

- the fuel consumption may be lowered since the backpressure may be lowered in comparison to prior art turbocharged engines, while still keeping the same torque and rpm.
- a pumping mean effective pressure may be lowered by means of lowered backpressure and intake pressure when braking.
- Reduce load on the crankshaft by means of taking energy from the exhaust gases electrically and/or mechanically, to drive electrical and/or mechanical auxiliaries.
- by having a by-pass valve in combination with an electric machine makes it possible to choose compressor working point independently of the internal combustion engine working point, as well as to some extent independently of the working point of the turbine.
- lower fuel consumption and lower pump losses due to the use of e-boost.
- possibility to re-use redundant exhaust gas energy as power to the crankshaft, which in turn may reduce fuel consumption.
- energy losses in the throttle may be reduced by controlling the by-pass valve.
- by controlling the by-pass valve it is possible to avoid the surge line and hence minimize the risk of entering surge in the compressor map.
- optimum engine performance during acceleration by controlling electric motor speed with respect to the pressure and mass flow in order to follow compressor surge line.
- by controlling the electric machine, by-pass valve, waste gate and variable nozzle turbine it is possible to shorten the time period for a so-called "light-off' time for the catalyzer by increasing the exhaust gas temperature faster than prior art turbocharger engines. The "light-off' time should be interpreted as the time it takes until the catalyzer reaches its working temperature.

It should be noted that the invention has mainly been described above with reference to a few embodiments. However, as is readily appreciated by a person skilled in the art, other embodiments than the ones disclosed above are equally possible within the scope of the invention, as defined by the appended patent claims.

It is further noted that, in the claims, the word "comprising" does not exclude other elements or steps, and the indefinite article "a" or "an" does not exclude a plurality. A single apparatus or other unit may fulfill the functions of several items recited in the claims. The mere fact that certain features or steps are recited in mutually different dependent claims does not indicate that a combination of these features or method steps cannot be used to advantage

## Claims

1. A supercharging system for an internal combustion engine (1), comprising:

   a charging device (6, 6a) with a turbine (7, 7a) and a compressor (8, 8a), said compressor having a high speed shaft (30);
   a planetary gear (25) coupled to said high speed shaft (30) and an electric motor, or generator, (20) via a low speed drive shaft (31);
   a clutch unit (18a); and
   a power transmission (16) for connecting a crank shaft (4) of the combustion engine (1) to said drive shaft (31) via the clutch unit (18a),
   **characterized in that** a system control unit (23) is configured to control an in-cylinder mean temperature of said internal combustion engine by controlling the electric motor, or generator, (20) speed, wherein said controlling comprises controlling the electric motor, or generator, (20) to slow down in speed, whereby the rotational speed of the compressor (8, 8a) and the turbine (7, 7a) will be reduced.

2. The supercharging system according to claim 1, wherein the turbine (7, 7a) is a variable nozzle turbine (VNT) comprising at least one variable nozzle turbine vane (19), wherein said in-cylinder mean temperature is controlled by means of controlling said electric motor, or generator, (20) in conjunction with said variable nozzle turbine vane (19).

3. The supercharging system according to claim 2, wherein said variable nozzle turbine vane (19) is arranged to adjust turbine efficiency of the charging device (6, 6a) based on sensor signal from the electric motor (20) and/or the engine control unit (29).

4. The supercharging system according to any one of the preceding claims, further comprising an air by-pass valve (21, 21a), wherein said in-cylinder mean temperature is controlled by means of controlling said electric motor, or generator, 20 in conjunction with an openness ratio of said air by-pass valve (21, 21a).

5. The supercharging system according to any one of the preceding claims, further comprising an operable waste gate (22, 22a), wherein said in-cylinder mean temperature is controlled by means of controlling said electric motor, or generator, 20 in conjunction with said operable waste gate (22, 22a).

6. The supercharging system according to any one of the preceding claims, wherein the electric motor, or generator, (20) comprises a sensor arranged to generate a speed parameter value representative of the rotational speed of the electric motor, or generator, (20);
   wherein the system control unit (23) is arranged to control the rotational speed of the charging device (6, 6a) based on the speed parameter according to a control algorithm.

7. The supercharging system according to claim any of claims 1 - 6, wherein said charging device is a first charging device (6a) with a first turbine (7a) and a first compressor (8a), said supercharging system further comprising a second charging device (6b) with a second turbine (7b) connected to a second compressor (8b) via a second compressor shaft (9b), wherein the system control unit (23) is further arranged to control a parameter representative of pressure and/or mass flow of the first charging device (6a) in relation to the second charging device (6b) during matching between the first and to the second charging device.

8. The supercharging system according to claim 7, further comprises an operable first waste gate (22a) coupled between an inlet side of the first turbine (7a) and an inlet side of the second turbine (7b).

9. The supercharging system according to claims 7 or 8, wherein the air by-pass valve is a first by-pass valve (21a) and wherein the supercharging system further comprises:

   a second air by-pass valve (21b) and
   a second waste gate (22b) coupled between the inlet side of the second turbine (7b) and an outlet side of the second turbine (7b).

10. The supercharging system according to claim 9, wherein the first charging device (6a) is a variable nozzle turbine (19),
    the system control unit (23) is operatively connected to the supercharging system to determine and control the state of the variable nozzle turbine (19), first, second and third clutches (18a, 18b, 18c), the electric motor, or generator, (20), the first and second air by-pass valves (21a, 21b), and the first and second first waste gates (22a, 22b),
    wherein said first clutch is said clutch unit (18a),
    wherein said second clutch (18b) connects the low speed drive shaft (31) with the electric motor, or generator (20),
    wherein said third clutch (18c) connects said power transmission (16) with said crankshaft (4).

11. The supercharging system according to any one of the preceding claims, wherein the system control unit (23) is further configured to operate the supercharging system according to a control algorithm based on one, or a plurality of, input parameters representative of operational properties of the supercharging system.

12. The supercharging system according to claim 11 when dependent on any one of claims 7-10, wherein the input parameters comprises at least one of the following:

- a first pressure and/or mass flow parameter representative of air intake operational state (p1);
- a second pressure and/or mass flow parameter representative of second compressor operational state (p2);
- a third pressure and/or mass flow parameter representative of first compressor operational state (p3);
- a fourth pressure and/or mass flow parameter representative of exhaust gas operational state (p4);
- a fifth pressure and/or mass flow parameter representative of first turbine operational state (p5); and/or
- a sixth pressure and/or mass flow parameter representative of second turbine operational state (p6).

13. A method for operating a supercharging system for an internal combustion engine (1) including an exhaust gas propelled turbo supercharging system, a mechanical supercharging system, and an electrical supercharging/regenerating system; wherein the exhaust gas propelled turbo supercharging system includes a first charging device (6, 6a); the first charging device comprising a first turbine (7, 7a) and a first compressor (8, 8a), the first compressor being arranged on a first compressor shaft (9, 9a); the exhaust gas propelled turbo supercharging system coupling the first turbine (7, 7a) to at least one exhaust outlet of the internal combustion engine (1), the electrical supercharging/regenerating system coupling an electric motor, or generator, (20) to the first compressor shaft via a planet gear, and the mechanical supercharging system coupling a crank shaft of the engine (1) to the electric motor via a first clutch (18a), **characterized by** the method comprising: controlling an in-cylinder mean temperature of said internal combustion engine by controlling the electric motor, or generator, (20) speed, wherein said controlling comprises controlling the electric motor, or generator, (20) to slow down in speed, whereby the rotational speed of the compressor (8, 8a) and the turbine (7, 7a) will be reduced.

14. The method according to claim 13, wherein the in-cylinder mean temperature of the internal combustion engine, at combustion, is controlled by control of exhaust back pressure.

15. The method according to any one of claims 13 or 14, further comprising driving the first compressor (8a) of the first charging device with the electric motor until a reference pressure and/or mass flow (p3) is obtained.

**Patentansprüche**

1. Turboaufladungssystem für einen Verbrennungsmotor (1), umfassend:

eine Ladevorrichtung (6, 6a) mit einer Turbine (7, 7a) und einem Verdichter (8, 8a), wobei der Verdichter eine schnell drehende Welle (30) aufweist; ein Planetengetriebe (25), das über eine langsam drehende Antriebswelle (31) an die schnell drehende Welle (30) und einen Elektromotor oder Generator (20) gekoppelt ist; eine Kupplungseinheit (18a); und ein Leistungsgetriebe (16) zum Verbinden einer Kurbelwelle (4) des Verbrennungsmotors (1) mit der Antriebswelle (31) über die Kupplungseinheit (18a), **dadurch gekennzeichnet, dass** eine Systemsteuereinheit (23) ausgestaltet ist, eine durchschnittliche Zylinderinnentemperatur des Verbrennungsmotors durch Steuern der Geschwindigkeit des Elektromotors oder Generators (20) zu steuern, wobei das Steuern das Steuern des Elektromotors oder Generators (20) umfasst, damit dessen Geschwindigkeit abnimmt, wodurch die Drehzahl des Verdichters (8, 8a) und der Turbine (7, 7a) verringert wird.

2. Turboaufladungssystem nach Anspruch 1, wobei die Turbine (7, 7a) eine Turbine mit Verstelldüse (VNT) ist, die mindestens eine verstellbare Turbinenleitschaufel (19) umfasst, wobei die durchschnittliche Zylinderinnentemperatur mittels des Steuerns des Elektromotors oder Generators (20) in Verbindung mit der verstellbaren Turbinenleitschaufel (19) gesteuert wird.

3. Turboaufladungssystem nach Anspruch 2, wobei die verstellbare Turbinenleitschaufel (19) angeordnet ist, den Turbinenwirkungsgrad der Ladevorrichtung (6, 6a) basierend auf einem Sensorsignal von dem Elektromotor (20) und/oder der Motorsteuereinheit (29) anzupassen.

4. Turboaufladungssystem nach einem der vorhergehenden Ansprüche, ferner umfassend ein Luft-Bypassventil (21, 21a), wobei die durchschnittliche Zylinderinnentemperatur mittels des Steuerns des Elektromotors oder Generators (20) in Verbindung mit einem Öffnungsverhältnis des Luft-Bypassventils (21, 21a) gesteuert wird.

5. Turboaufladungssystem nach einem der vorhergehenden Ansprüche, ferner umfassend ein bedienbares Ladedruck-Regelventil (22, 22a), wobei die durchschnittliche Zylinderinnentemperatur mittels des Steuerns des Elektromotors oder Generators (20) in Verbindung mit dem bedienbaren Ladedruck-Regelventil (22, 22a) gesteuert wird.

6. Turboaufladungssystem nach einem der vorhergehenden Ansprüche, wobei der Elektromotor oder Generator (20) einen Sensor umfasst, der angeordnet ist, einen Geschwindigkeitsparameterwert zu erzeugen, der die Drehzahl des Elektromotors oder Generators (20) repräsentiert; wobei die Systemsteuereinheit (23) angeordnet ist, die Drehzahl der Ladevorrichtung (6, 6a) basierend auf dem Geschwindigkeitsparameter gemäß einem Steueralgorithmus zu steuern.

7. Turboaufladungssystem nach einem der Ansprüche 1 bis 6, wobei die Ladevorrichtung eine erste Ladevorrichtung (6a) mit einer ersten Turbine (7a) und einem ersten Verdichter (8a) ist, wobei das Turboaufladungssystem ferner eine zweite Ladevorrichtung (6b) mit einer zweiten Turbine (7b) umfasst, die mit einem zweiten Verdichter (8b) über eine zweite Verdichterwelle (9b) verbunden ist, wobei die Systemsteuereinheit (23) ferner angeordnet ist, einen Parameter zu steuern, der Druck und/oder Massenstrom der ersten Ladevorrichtung (6a) im Verhältnis zur zweiten Ladevorrichtung (6b) während des Abgleichs zwischen der ersten und der zweiten Ladevorrichtung repräsentiert.

8. Turboaufladungssystem nach Anspruch 7, ferner umfassend ein bedienbares erste Ladedruck-Regelventil (22a), das zwischen einer Einlassseite der ersten Turbine (7a) und einer Einlassseite der zweiten Turbine (7b) gekoppelt ist.

9. Turboaufladungssystem nach Anspruch 7 oder 8, wobei das Luft-Bypassventil ein erstes Bypassventil (21a) ist und wobei das Turboaufladungssystem ferner Folgendes umfasst:

   ein zweites Luft-Bypassventil (21b) und ein zweites Ladedruck-Regelventil (22b), das zwischen der Einlassseite der zweiten Turbine (7b) und einer Auslassseite der zweiten Turbine (7b) gekoppelt ist.

10. Turboaufladungssystem nach Anspruch 9, wobei die erste Ladevorrichtung (6a) eine Turbine mit Verstelldüse (19) ist, die Systemsteuereinheit (23) betriebsfähig mit dem Turboaufladungssystem verbunden ist, um den Zustand der Turbine mit Verstelldüse (19), der ersten, zweiten und dritten Kupplung (18a, 18b, 18c), des Elektromotors oder Generators (20), des ersten und zweiten Luft-Bypassventils (21a, 21b) und des ersten und zweiten Ladedruck-Regelventils (22a, 22b) zu bestimmen und steuern, wobei die erste Kupplung die Kupplungseinheit (18a) ist, wobei die zweite Kupplung (18b) die langsam drehende Antriebswelle (31) mit dem Elektromotor oder Generator (20) verbindet, wobei die dritte Kupplung (18c) das Leistungsgetriebe (16) mit der Kurbelwelle (4) verbindet.

11. Turboaufladungssystem nach einem der vorhergehenden Ansprüche, wobei die Systemsteuereinheit (23) ferner ausgestaltet ist, das Turboaufladungssystem gemäß einem Steueralgorithmus basierend auf einem oder einer Vielzahl von Eingabeparametern zu betreiben, der/die Betriebseigenschaften des Turboaufladungssystems repräsentiert/repräsentieren.

12. Turboaufladungssystem nach Anspruch 11, wenn dieser von einem der Ansprüche 7 bis 10 abhängig ist, wobei die Eingabeparameter mindestens eines der Folgenden umfassen:

   - einen ersten Druck- und/oder Massenstromparameter, der einen Luftzufuhrbetriebszustand (p1) repräsentiert;
   - einen zweiten Druck- und/oder Massenstromparameter, der einen zweten Verdichterbetriebszustand (p2) repräsentiert;
   - einen dritten Druck- und/oder Massenstromparameter, der einen ersten Verdichterbetriebszustand (p3) repräsentiert;
   - einen vierten Druck- und/oder Massenstromparameter, der einen Abgasbetriebszustand (p4) repräsentiert;
   - einen fünften Druck- und/oder Massenstromparameter, der einen ersten Turbinenbetriebszustand (p5) repräsentiert; und/oder
   - einen sechsten Druck- und/oder Massenstromparameter, der einen zweiten Turbinenbetriebszustand (p6) repräsentiert.

13. Verfahren zum Betreiben eines Turboaufladungssystems für einen Verbrennungsmotor (1), das ein mit Abgas angetriebenes Turbohochaufladungssystem, ein mechanisches Turboaufladungssystem und ein elektrisches Turboaufladungs-/Regenerationssystem beinhaltet; wobei das mit Abgas angetriebene Turbohochaufladungssystem eine erste Ladevorrichtung (6, 6a) beinhaltet;

wobei die erste Ladevorrichtung eine erste Turbine (7, 7a) und einen ersten Verdichter (8, 8a) umfasst, wobei der erste Verdichter an einer ersten Verdichterwelle (9, 9a) angeordnet ist;

wobei das mit Abgas angetriebene Turbohochaufladungssystem die erste Turbine (7, 7a) an mindestens einen Abgasauslass des Verbrennungsmotors (1) koppelt, das elektrische Turboaufladungs-/Regenerationssystem einen Elektromotor oder Generator (20) an die erste Verdichterwelle über ein Planetengetriebe koppelt und das mechanische Turboaufladungssystem eine Kurbelwelle des Motors (1) an den Elektromotor über eine erste Kupplung (18a) koppelt,

**dadurch gekennzeichnet, dass**

das Verfahren Folgendes umfasst: Steuern einer durchschnittlichen Zylinderinnentemperatur des Verbrennungsmotors durch Steuern der Geschwindigkeit des Elektromotors oder Generators (20), wobei das Steuern das Steuern des Elektromotors oder Generators (20) umfasst, damit seine Geschwindigkeit abnimmt, wodurch die Drehzahl des Verdichters (8, 8a) und der Turbine (7, 7a) verringert wird.

**14.** Verfahren nach Anspruch 13, wobei die durchschnittliche Zylinderinnentemperatur des Verbrennungsmotors bei der Verbrennung durch Steuerung des Abgasgegendrucks gesteuert wird.

**15.** Verfahren nach einem der Ansprüche 13 oder 14, ferner umfassend das Antreiben des ersten Verdichters (8a) der ersten Ladevorrichtung mit dem Elektromotor bis ein Referenzdruck und/oder -massenstrom (p3) erhalten wird.

**Revendications**

**1.** Système de suralimentation pour un moteur à combustion interne (1), comprenant :

un dispositif de chargement (6, 6a) comportant une turbine (7, 7a) et un compresseur (8, 8a), ledit compresseur possédant un arbre à rotation rapide (30) ;

un engrenage planétaire (25) couplé audit arbre à rotation rapide (30) et à un moteur électrique, ou générateur, (20) par l'intermédiaire d'un arbre d'entraînement à rotation lente (31) ;

une unité d'embrayage (18a) ; et

une transmission de puissance (16) destinée à raccorder un vilebrequin (4) du moteur à combustion (1) audit arbre d'entraînement (31) par l'intermédiaire de l'unité d'embrayage (18a), **caractérisé en ce qu'**une unité de commande de système (23) est conçue de manière à commander la température moyenne intérieure des cylindres dudit moteur à combustion interne en commandant la vitesse du moteur électrique, ou générateur, (20), ladite commande comprenant la commande de ralentissement du moteur électrique, ou générateur, (20), ce qui ralentit la rotation du compresseur (8, 8a) et de la turbine (7, 7a).

**2.** Système de suralimentation selon la revendication 1, dans lequel la turbine (7, 7a) est une turbine à distributeur variable (TDV) comprenant au moins une aube de turbine à distributeur variable (19), dans lequel ladite température moyenne intérieure des cylindres est commandée par la commande dudit moteur électrique, ou générateur, (20) et par ladite aube de turbine à distributeur variable (19).

**3.** Système de suralimentation selon la revendication 2, dans lequel ladite aube de turbine à distributeur variable (19) est conçue de manière à régler le rendement de la turbine du dispositif de chargement (6, 6a) à partir du signal de capteur du moteur électrique (20) et/ou l'unité de commande moteur (29).

**4.** Système de suralimentation selon l'une quelconque des revendications précédentes, comprenant en outre une soupape de dérivation d'air (21, 21a), dans lequel ladite température moyenne intérieure des cylindres est commandée par la commande dudit moteur électrique, ou générateur, (20) et par le degré d'ouverture de ladite soupape de dérivation d'air (21, 21a).

**5.** Système de suralimentation selon l'une quelconque des revendications précédentes, comprenant en outre un clapet de décharge actionnable (22, 22a), dans lequel ladite température moyenne intérieure des cylindres est commandée par la commande dudit moteur électrique, ou générateur, (20) et par ledit clapet de décharge actionnable (22, 22a).

**6.** Système de suralimentation selon l'une quelconque des revendications précédentes, dans lequel le moteur électrique, ou générateur, (20) comporte un capteur conçu pour générer un paramètre de vitesse dont la valeur est représentative de la vitesse de rotation du moteur électrique, ou générateur, (20) ; l'unité de commande de système (23) étant conçue pour commander la vitesse de rotation du dispositif de chargement (6, 6a) à partir du paramètre de vitesse selon un algorithme de commande.

**7.** Système de suralimentation selon l'une quelconque des revendications 1 à 6, dans lequel ledit dispositif de chargement est un premier dispositif de chargement (6a) comportant une première turbine (7a) et un premier compresseur (8a), ledit système de suralimentation comprenant en outre un deuxième dispositif de chargement (6b) comportant une deuxième turbine (7b) raccordée à un deuxième compresseur (8b) par l'intermédiaire d'un deuxième arbre de compresseur (9b), dans lequel l'unité de commande de système (23) est de plus conçue pour commander un paramètre représentatif de la pression et/ou du débit massique du premier dispositif de chargement (6a) en relation avec le deuxième dispositif de chargement (6b) lors de l'appariement du premier et du deuxième dispositif de chargement.

8. Système de suralimentation selon la revendication 7, comprenant en outre un premier clapet de décharge actionnable (22a) couplé entre une entrée de la première turbine (7a) et une entrée de la deuxième turbine (7b).

9. Système de suralimentation selon la revendication 7 ou 8, dans lequel la soupape de dérivation d'air est une première soupape de dérivation d'air (21a) et dans lequel le système de suralimentation comprend en outre :

     une deuxième soupape de dérivation d'air (21b) et

     un deuxième clapet de décharge (22b) couplé entre l'entrée de la deuxième turbine (7b) et une sortie de la deuxième turbine (7b).

10. Système de suralimentation selon la revendication 9, dans lequel le premier dispositif de chargement (6a) est une turbine à distributeur variable (19),

l'unité de commande de système (23) est raccordée de manière fonctionnelle au système de suralimentation de manière à déterminer et commander l'état de la turbine à distributeur variable (19), d'un premier, d'un deuxième et d'un troisième embrayage (18a, 18b, 18c), du moteur électrique, ou générateur, (20), de la première et de la deuxième soupape de dérivation d'air (21a, 21b), et du premier et du deuxième clapet de décharge (22a, 22b),

dans lequel ledit premier embrayage est ladite unité d'embrayage (18a),

dans lequel ledit deuxième embrayage (18b) raccorde l'arbre d'entraînement à rotation lente (31) au moteur électrique, ou générateur, (20),

dans lequel ledit troisième embrayage (18c) raccorde ladite transmission de puissance (16) audit vilebrequin (4).

11. Système de suralimentation selon l'une quelconque des revendications précédentes, dans lequel l'unité de commande de système (23) est de plus conçue pour actionner le système de suralimentation selon un algorithme de commande à partir d'un, ou d'une pluralité, de paramètres d'entrée représentatifs des propriétés opérationnelles du système de suralimentation.

12. Système de suralimentation selon la revendication 11 et l'une quelconque des revendications 7 à 10, dans lequel les paramètres d'entrée comprennent au moins un des suivants :

     - un premier paramètre de pression et/ou de débit massique représentatif de l'état opérationnel d'admission d'air (p1) ;
     - un deuxième paramètre de pression et/ou de débit massique représentatif de l'état opérationnel du deuxième compresseur (p2) ;
     - un troisième paramètre de pression et/ou de débit massique représentatif de l'état opérationnel du premier compresseur (p3) ;
     - un quatrième paramètre de pression et/ou de débit massique représentatif de l'état opérationnel du gaz d'échappement (p4) ;
     - un cinquième paramètre de pression et/ou de débit massique représentatif de l'état opérationnel de la première turbine (p5) ; et/ou
     - un sixième paramètre de pression et/ou de débit massique représentatif de l'état opérationnel de la deuxième turbine (p6).

13. Procédé de fonctionnement d'un système de suralimentation pour un moteur à combustion interne (1) comportant un système de suralimentation turbo mû par le gaz d'échappement, un système de suralimentation mécanique et un système de suralimentation/régénération électrique ;

dans lequel le système de suralimentation turbo mû par le gaz d'échappement comporte un premier dispositif de chargement (6, 6a) ;

le premier dispositif de chargement comprenant une première turbine (7, 7a) et un premier compresseur (8, 8a), le premier compresseur étant disposé sur un premier arbre de compresseur (9, 9a) ;

le système de suralimentation turbo mû par le gaz d'échappement couplant la première turbine (7, 7a) à au moins une sortie d'échappement du moteur à combustion interne (1), le système de suralimentation/régénération électrique couplant un moteur électrique, ou générateur, (20) au premier arbre de compresseur par l'intermédiaire d'un engrenage planétaire, et le système de suralimentation mécanique couplant un vilebrequin du moteur (1) au moteur électrique par l'intermédiaire d'un premier embrayage (18a),

**caractérisé en ce que**

le procédé comprend : la commande d'une température moyenne intérieure des cylindres dudit moteur à combustion interne par la commande de la vitesse du moteur électrique, ou générateur, (20), ladite commande comprenant la commande de ralentissement du moteur électrique, ou générateur, (20), ce qui ralentit la rotation du compresseur (8, 8a) et de la turbine (7, 7a).

14. Procédé selon la revendication 13, dans lequel la température moyenne intérieure des cylindres du moteur à combustion interne est commandée, lors de la combustion, par la régulation de la contrepression à l'échappement.

15. Procédé selon l'une quelconque des revendications 13 et 14, comprenant en outre l'entraînement du premier compresseur (8a) du premier dispositif de chargement par le moteur électrique jusqu'à obtenir une pression et/ou un débit massique de référence (p3).

*Fig. 1a*

Fig. 1b

*Fig. 2a*

*Fig. 2b*

*Fig. 2c*

*Fig. 3a*

Fig. 3b

Fig. 3c

Fig. 4

Fig. 5

**EP 2 573 356 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009014488 A2